# EUROPEAN PATENT SPECIFICATION

(11) **EP 2 767 203 B1**
(45) Date of publication and mention of the grant of the patent: **27.11.2019**
(21) Application number: 14155297.6
(22) Date of filing: 14.02.2014
(51) Int. Cl.: A47J 43/07

(54) **Hand blender**
Stabmixer
Mixeur ménager du type plongeant

(30) Priority: 14.02.2013 GB 201302607
(43) Date of publication of application: 20.08.2014
(73) Proprietor: Gort-Barten, Alex, Crawley, West Sussex RH11 7ST (GB)
(72) Inventor: Gort-Barten, Alex, Crawley, West Sussex RH11 7ST (GB)
(74) Representative: JENSEN & SON

(56) References cited:
- EP-A2- 1 854 390
- WO-A1-2011/113082
- GB-A- 2 469 639

## Description

The invention relates to a hand blender comprising a motor driven cutter and a cutter guard.

Hand blenders are a popular alternative to conventional food processors with chefs. The hand blender, which are also referred to as stick mixers or wand mixers, generally have a hand grip part, which houses a motor and the operating switches, a drive shaft driven by the motor and a foot part at the end of the shaft remote from the motor, which houses the blades. The motor is generally quite powerful and can rotate at up to 15,000 rpm. Furthermore, hand blenders are usually powered by mains electricity due to the power requirements of the motor.

In use, a hand blender has a wide variety of applications such as whipping double cream, grinding spices or coffee, crushing ice, blending vegetables and mashing potatoes. Blenders will typically be provided with different blades such as whisking, mincing and beating blade but due to the nature of the blender these blades are small and can be difficult to replace, particularly when coated with food. In particular mincing blades are sharp and are known to be a common source of cuts.

Due to these practical difficulties in use, the hand blender has remained largely used by commercial chefs but has not been adopted by home users.

To achieve good chopping standards in a blender, the chopping zones of the blades should be maximised such as by angling the blades, having a large blade diameter and minimal clearance between the blades and surrounding surfaces. To achieve good chopping standards in liquids, eg for soups, it is necessary to keep the ingredients within the chopping zone of the blades until they are finely chopped. For this reason the foot on known hand blenders have small openings which will enable the food to be chopped more finely than with larger openings, which would otherwise let the food out before it is finely chopped.

This arrangement has the downside that when the blender is operated in a liquid, the small openings cause a suction force which pulls the wand and foot of the blender to the base of the container due to the displacement of the liquid inside the foot. This high suction force is tolerated in the known designs as it is a side effect of good chopping performance.

The problem with this suction force is that it can be strong enough to enable a pan full of liquid to be lifted. It is possible to lift containers with 2 litres of liquid with some designs. Even the best-known designs such as WO2011/113082 lift 500ml. This is inconvenient and potentially risky for an inexperienced user.

According to the invention there is provided a hand blender in accordance with the characteristics of Claim 1

In a preferred embodiment, the rib is adapted to cause an underpressure in use in the area of the opening behind the rib.

In a further aspect the hand blender comprises a motor, which motor drives a drive shaft, which drive shaft is adapted to rotate a blade, which blade is releasably attached to the end of the drive shaft remote from the motor, wherein the blender is provided with a switch, which switch is adapted to prevent the drive shaft from rotating when the blender is tilted by more than a pre-determined amount.

Preferably, the switch is adapted to switch off the motor. Preferably, the switch prevents the drive shaft from rotating when the blender is tilted by at least 90°. Preferably, the hand blender comprises a motor, which motor drives a drive shaft, which drive shaft is adapted to rotate a blade, which blade is releasably attached to the end of the drive shaft remote from the motor, wherein the blender is provided with a cutter guard, which cutter guard is adapted to enable material to move towards and/or away from the blade in substantially the plane of rotation of the blade, wherein the blender is provided with a detatchable foot adapted to co-operate with the cutter guard, which foot is adapted to alter the output of the blender and blade.

Preferably, the foot comprises an element adapted to be mounted on the cutter guard and a circumferential wall depending therefrom.

An exemplary embodiment of the invention will now be described in greater detail with reference to the drawings in which:

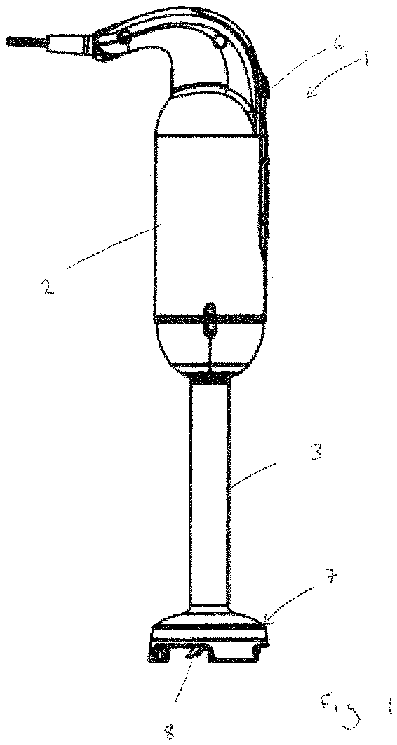

- Fig. 1: shows a hand blender
- Fig. 2: shows a plan view of the foot design
- Fig. 3: shows a side view of the foot design

Fig .1 shows a hand blender 1 having a handle portion 2 and a drive shaft 3. A cutter assembly comprising a cutter guard 7 and blade is provided at the end of the drive shaft. The cutter guard 7 and blade may be detatchable. The drive shaft 3 is driven by a motor 4 located in the handle portion 2. An orientation sensor 5 is also located in the handle portion 2. The orientation sensor is a type of tip over or tilt switch that is adapted to cut power to the motor in the event that the mixer is tilted by more than a predetermined amount such as to the horizontal. It would also be possible to have the switch cut power to the drive shaft using an interlock arrangement. The handle portion is also provided with switches 6 to actuate the blender.

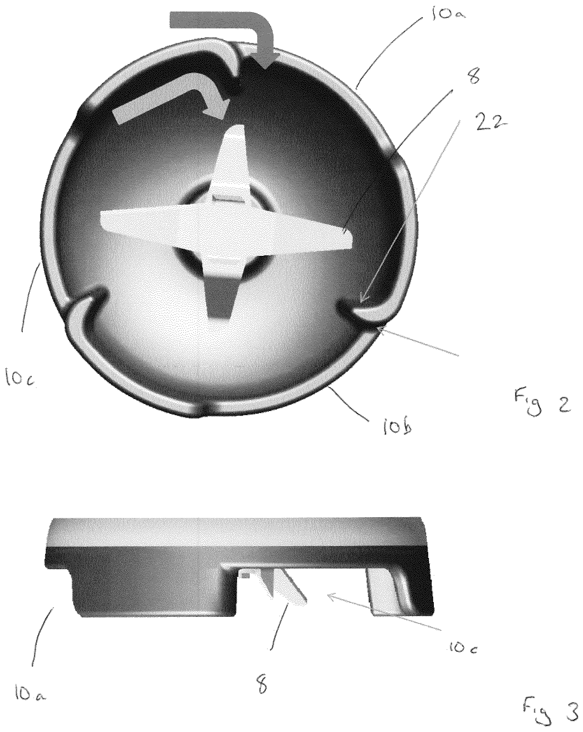

Figure 2 shows a plan view of the foot of the blender comprising the cutter guard 7 and blade assembly 8 mounted on the drive shaft 3. The cutter guard 7 has a dependent circumferential wall. The blade assembly is co-axial with the drive shaft. The cutter guard is provided with three openings 10a-c in the side circumferential wall. The openings enable material to enter or egress from the interior of the foot.

A fin or rib 22 is formed on the interior surface of the circumferential wall before each opening viewed with respect to the direction of rotation of the blades. The fin is provided with a curved surface on the face of the fin facing the direction of rotation of the blade and hence any material being rotated by the blades. The face of the fin has a curved cross-section such that a tangent at the apex of fin substantially points to the centre of the jug. The other face of the fin is also curved so as to encourage liquid and ingredients into the wand foot. In use, the curved face is disposed towards the rotating material and liquid such that the curvature of the face urges the material towards the centre of the mixer. The apex of the fin lies adjacent to a plane perpendicular to the edge of the flanged disc. The fin or rib breaks up the vortex produced by the blades reducing the suction created by the wand. It also directs the ingredients into the path of the blades. The action of the rib in urging ingredients towards the blades also creates an underpressure at the other surface of the fin, which encourages the flow of material into the wand foot. These effects then enable much wider openings than in the known designs, which in turn allows a larger flow rate for the ingredients in and out of the foot. This in turn results in an effective stirring of the ingredients.

## Claims

1. A hand blender (1) comprising a motor, which motor drives a drive shaft (3), which drive shaft is adapted to rotate a blade (8), the blender comprising a cutter guard (7) having a circumferential wall having openings (10a, 10b, 10c), wherein a rib (22) is provided on an inner surface of the circumferential wall before each opening viewed with respect to the direction of rotation of the blade, wherein each rib (22) comprises a curved surface facing the direction of flow of material moved by the blade, **characterised in that** each rib (22) is curved so that in use ingredients or liquid is urged towards the centre of the blender, wherein the face of the rib (22) has a curved cross-section such that a tangent at the apex of the rib (22) substantially points to the centre of the assembly.

2. A hand blender according to Claim 1, wherein the other face of the rib (22) is also curved so as to encourage liquid and ingredients into the blender.

3. A hand blender according to Claim 1 or Claim 2, wherein the rib (22) is adapted to cause an underpressure in use in the area of the opening behind the rib.

## Patentansprüche

1. Ein Stabmixer umfassend einen Motor, welcher eine Antriebswelle (3) antreibt, wobei die Antriebswelle darauf ausgelegt ist, eine Klinge (8) zu drehen, und der Mixer einen Schneidschutz (7) mit einer Umfangswand mit Öffnungen (10a, 10b, 10c) umfasst, und wobei an der Innenseite der Umfangswand vor jeder Öffnung, in Drehrichtung der Klinge gesehen, eine Rippe (22) vorgesehen ist,
wobei jede Rippe (22) eine gekrümmte Oberfläche umfasst, die gegen die Flussrichtung des von der Klinge bewegten Materials gerichtet ist, **dadurch gekennzeichnet, dass** jede Rippe (22) gekrümmt ist, so dass die Zutaten oder Flüssigkeit zur Mitte des Mixers hin getrieben werden, wobei die Stirnfläche der Rippe (22) einen gekrümmten Querschnitt hat, so dass eine Tangente am Scheitelpunkt der Rippe (22) im Wesentlichen zur Mitte des Aufbaus hin zeigt.

2. Ein Stabmixer nach Anspruch 1, wobei die andere Stirnfläche der Rippe (22) ebenfalls gekrümmt ist, um die Bewegung von Flüssigkeit und Zutaten in den Mixer hinein zu fördern.

3. Ein Stabmixer nach Anspruch 1 oder Anspruch 2, wobei die Rippe (22) so ausgelegt ist, dass sie während der Benutzung einen Unterdruck im Bereich der Öffnung hinter der Rippe erzeugt.

## Revendications

1. Mixeur plongeant (1) comprenant un moteur, lequel moteur entraîne un arbre d'entraînement (3), lequel arbre d'entraînement est adapté à faire tourner une lame (8), le mixeur comprenant un protecteur de couteau (7) ayant une paroi circonférentielle ayant des ouvertures (10a, 10b, 10c), dans lequel une nervure (22) est prévue sur une surface interne de la paroi circonférentielle avant chaque ouverture visualisée par rapport à la direction de rotation de la lame, dans lequel chaque nervure (22) comprend une surface courbée tournée vers la direction d'écoulement de matière déplacée par la lame, **caractérisé en ce que** chaque nervure (22) est courbée de sorte qu'en cours d'utilisation, des ingrédients ou du liquide est poussé vers le centre du mixeur, dans lequel la face de la nervure (22) a une section transversale courbée de sorte qu'une tangente au sommet de la nervure (22) pointe essentiellement vers le centre de l'ensemble.

2. Mixeur plongeant selon la revendication 1, dans lequel l'autre face de la nervure (22) est également courbée de manière à encourager du liquide et des ingrédients dans le mixeur.

3. Mixeur plongeant selon la revendication 1 ou la revendication 2, dans lequel la nervure (22) est adaptée à amener une sous-pression en cours d'utilisation dans la zone de l'ouverture derrière la nervure.
